# EUROPÄISCHE PATENTANMELDUNG

(11) **EP 2 428 765 A1**
(43) Veröffentlichungstag der Anmeldung: **14.03.2012**
(21) Anmeldenummer: 10176535.2
(22) Anmeldetag: 14.09.2010
(51) Int. Cl.: G01B 11/245, G01B 11/24, F01D 5/00, F01D 21/00

(54) **Verfahren und Vorrichtung zur Behandlung von Turbinenschaufeln**

(71) Anmelder: Siemens Aktiengesellschaft, 80333 München (DE)
(72) Erfinder: Arjakine, Nikolai, 10555 Berlin (DE); Melzer-Jokisch, Torsten, 15366 Neuenhagen bei Berlin (DE); Thomaidis, Dimitrios, 14197 Berlin (DE)

(57) **Zusammenfassung**

Die Erfindung betrifft ein Verfahren zur Behandlung von Turbinenschaufeln (1), die Kühlluftbohrungen (2) für den Austritt von Kühlluft aufweisen, wobei eine Schutzschicht aufgebracht wird und dann die durch die Schutzschicht teilweise oder ganz geschlossenen Kühlluftbohrungen wieder geöffnet werden, wobei Koordinaten über die Lage der Kühlluftbohrungen vor dem Aufbringen der Schutzschicht mit Hilfe eines auf dem optischen Triangulationsverfahren basierenden, optischen Messsensors (4) mit wenigstens einer eine Lichtstrahl erzeugenden Lichtquelle und wenigstens einem Lichtdetektor erfasst werden und die dabei gewonnenen Daten nach dem Aufbringen der Schutzschicht zur Steuerung eines Abtraggerätes zum Abtragen von die Kühlluftbohrungen (2) teilweise oder ganz bedeckenden Schutzschicht verwendet werden.

## Beschreibung

Die Erfindung betrifft ein Verfahren zur Behandlung von Turbinenschaufeln, die Kühlluftbohrungen für den Austritt von Kühlluft aufweisen, wobei eine Schutzschicht aufgebracht wird und dann die durch die Schutzschicht teilweise oder ganz geschlossenen Kühlluftbohrungen wieder geöffnet werden. Die Erfindung bezieht sich des Weiteren auf eine Vorrichtung, die geeignet ist, die Lage von Kühlluftbohrungen in Turbinenschaufeln zu ermitteln.

In thermisch hochbeanspruchten Turbinen werden die Turbinenschaufeln außenseitig mit einer meist keramischen Schutzschicht versehen. Beispiele solcher Schutzschichten sind der EP 2 085 498 A1 zu entnehmen. Mit Hilfe solcher Schutzschichten kann die Turbine mit höheren Temperaturen betrieben und hierdurch deren Wirkungsgrad verbessert werden. Zusätzlich haben solche Turbinenschaufeln Kühlluftbohrungen, über die Kühlluft austreten kann, welche den Kühlluftbohrungen von innen über Kühlluftkanäle zugeführt wird.

Die Schutzschichten solcher Turbinenschaufeln unterliegen dem Verschleiß. Von Zeit zu Zeit muss deshalb die Schutzschicht erneuert werden. Dabei müssen zunächst die Reste der verbliebenen Schutzschicht entfernt werden, bevor die neue Schutzschicht aufgebracht wird. Dabei werden die Kühlluftbohrungen durch das Material der neuen Schutzschicht teilweise oder vollständig verschlossen.

Das Öffnen der Kühlluftbohrungen geschieht im Stand der Technik nach wie vor von Hand mit Hilfe einer Feile, wobei die Kühlluftbohrungen anhand von leichten Vertiefungen in der Schutzschicht oder kleinen, unzentrischen Löchern identifiziert werden. Dieser Prozess ist zeitraubend und damit kostenaufwändig.

Der Erfindung liegt die Aufgabe zugrunde, ein kostengünstiges und präzises Verfahren bereitzustellen, mit dem die durch eine Schutzschicht teilweise oder ganz geschlossenen Kühlluftbohrungen von Turbinenschaufeln wieder geöffnet werden können. Eine weitere Aufgabe besteht darin, eine hierfür geeignete Vorrichtung zu konzipieren.

Die erstgenannte Aufgabe wird erfindungsgemäß dadurch gelöst, dass Koordinaten über die Lage der Kühlluftbohrungen vor dem Aufbringen der Schutzschicht mit Hilfe eines auf dem optischen Triangulationsverfahren basierenden, optischen Messsensors mit wenigstens einer einen Lichtstrahl erzeugenden Lichtquelle und wenigstens einem Lichtdetektor erfasst werden und dass die Kühlluftbohrungen mittels eines Abtraggerätes zum Abtragen von die Kühlluftbohrungen teilweise oder ganz bedeckenden Schutzschicht geöffnet werden, wobei die mit Hilfe des Triangulationsverfahrens ermittelten Daten zur Steuerung des Abtraggerätes verwendet werden.

Grundgedanke der Erfindung ist es also, die Lage der Kühlluftbohrungen mit Hilfe eines optischen Triangulationsverfahrens zu ermitteln und die dabei gewonnenen Daten zur Steuerung eines Abtraggerätes zu verwenden, das die die Kühlluftbohrungen teilweise oder ganz bedeckenden Bereiche der Schutzschicht entfernt. Das Verfahren liefert präzise Daten über die Lage der Kühlluftbohrungen bzw. deren Längsmittelachse, die dann für die Führung des Abtraggerätes verwendet werden können. Das Verfahren sichert einen präzisen Abtrag der in die Kühlluftbohrungen hereinragenden Schutzschicht und ist geeignet, weitgehend automatisiert zu werden. Außerdem wird die Ausschussrate erheblich gesenkt.

Das Triangulationsverfahren ist im Stand der Technik schon seit langem für vielfältige Einsatzzwecke bekannt, beispielsweise zur Bestimmung des Oberflächenprofils eines Objekts (DE 195 32 767 A1), zur Online-Materialschichtdickenbestimmung (DE 103 13 888 A1), zur Entfernungsbestimmung eines Objekts in einem Überwachungsbereich (EP 1 947 477 B1) und zum Inspizieren von Schienen (EP 1 548 400 A1). Diese Dokumente werden zwecks näherer Beschreibung des optischen Triangulationsverfahrens zum Inhalt dieser Anmeldung gemacht.

Das erfindungsgemäße Verfahren kann prinzipiell schon beim erstmaligen Auftrag einer Schutzschicht auf eine Turbinenschaufel angewendet werden. Es kann jedoch auch im Rahmen eines Reparaturverfahrens eingesetzt werden, bei dem eine durch den Einsatz der Turbinenschaufel verbrauchte Schutzschicht zunächst entfernt und dann eine neue Schutzschicht aufgebracht wird. In diesem Fall ist es zweckmäßig, dass die Erfassung der Koordinaten der Kühlluftbohrungen nach dem Entfernen der verbrauchten Schutzschicht erfolgt. Dann kann die neue Schutzschicht aufgetragen werden und die die Kühlluftbohrungen teilweise oder ganz bedeckenden Bereiche der Schutzschicht mit Hilfe des erfindungsgemäßen Abtraggerätes entfernt werden, bei dem die mit Hilfe des Triangulationsverfahrens gewonnenen Daten zur Steuerung des Abtraggeräts verwendet werden.

Als Messsensor wird vorzugsweise ein Lasertriangulationssensor verwendet, da mit einem solchen Sensor präzise Daten über die Geometrie und Lage der Kühlluftbohrungen erhalten werden können.

Bei dem erfindungsgemäßen Verfahren wird zweckmäßigerweise jede Kühlluftbohrung dadurch vermessen, dass der Lichtstrahl in die Kühlluftbohrung in unterschiedlichen Stellungen zu dessen Längsmittelachse eingestrahlt wird. Dabei kommt es zu unterschiedlichen Lichtremissionen, die von dem Lichtdetektor erfasst und in Signaldaten umgesetzt werden. Es entsteht ein Datenprofil, aus dem sich die Koordinaten der Lage der Kühlluftbohrungen bzw. deren Längsmittelachse ermitteln lassen. Vorzugsweise sollte der Lichtstrahl in einer Ebene in mindestens drei unterschiedlichen Winkeln zur Längsmittelachse der jeweiligen Kühlluftbohrung eingestrahlt werden. Ein noch präziseres Datenprofil erhält man, wenn der Lichtstrahl in mindestens zwei unterschiedlichen Ebenen in jeweils unterschiedlichen Winkeln zur Längsmittelachse der Kühlluftbohrung eingestrahlt wird. Für die Aufbereitung der dabei gewonnenen Daten und damit zur Ermittlung der Koordinaten der Lage der Kühlluftbohrungen kann ein mehrdimensionales Bildbearbeitungsprogramm verwendet werden.

Was das Abtragen der Schutzschicht im Bereich der Kühlluftbohrungen betrifft, wird erfindungsgemäß vorgeschlagen, hierfür den Laserstrahl eines Laserabtraggerätes zu verwenden.

Die die Vorrichtung betreffende, zweite Aufgabe wird erfindungsgemäß dadurch gelöst, dass die Vorrichtung einen für ein optisches Triangulationsverfahren geeigneten, optischen Messsensor mit wenigstens einer einen Lichtstrahl erzeugenden Lichtquelle und mit wenigstens einem Lichtdetektor aufweist, wobei der Messsensor an einer Halterung stellungsveränderbar angebracht ist und eine Auswerteeinheit aufweist, die derart ausgebildet ist, dass sie auf der Grundlage der von dem Lichtdetektor beim Einstrahlen des Lichtstrahls in eine Kühlluftbohrung in unterschiedlichen Stellungen erzeugten Signale Koordinaten der Lage der Kühlluftbohrungen bzw. deren Längsmittelachsen gewinnt. Wie schon oben beschrieben, können diese Koordinaten als Daten für die Steuerung eines Abtraggerätes verwendet werden.

Der Messsensor ist zweckmäßigerweise als Lasertriangulationssensor ausgebildet. Als Halterung kann eine Werkzeugmaschine, eine Koordinatenmessmaschine und/oder ein Messarm dienen. Die Lichtquelle sollte an der Halterung in mindestens einer Ebene in unterschiedlichen Winkellagen einstellbar sein. Ein noch präziseres Datenprofil kann erhalten werden, wenn die Lichtquelle an der Halterung in mehreren Ebenen und jeweils in unterschiedlichen Winkellagen einstellbar ist.

Nach der Erfindung ist ferner vorgesehen, dass Lichtquelle und Lichtdetektor zu einem einheitlichen Messsensor zusammengefasst sind, der an der Halterung stellungsveränderbar angebracht ist.

Die Auswerteeinrichtung kann mit einem mehrdimensionalen Bildverarbeitungsprogramm zur Auswertung der von dem Lichtdetektor erzeugten Signale versehen sein.

In besonders vorteilhafter Ausgestaltung gehört zu der Vorrichtung ein Abtraggerät zum Abtragen der Schutzschicht im Bereich der Kühlluftbohrungen, das insbesondere als Laserabtraggerät ausgebildet ist, das einen Laserstrahl erzeugt. Dabei arbeitet das Abtraggerät mit der Auswerteeinrichtung in der Weise zusammen, dass die Ausrichtung des Abtraggerätes in Abhängigkeit von den in der Auswerteeinrichtung aufbereiteten Daten der Kühlluftbohrungen erfolgt. Vorzugsweise sollte die Ausrichtung derart stattfinden, dass der Laserstrahl des Laserabtraggerätes koaxial und/oder parallel zur Mittellängsachse der jeweiligen Kühlluftbohrungen einstrahlt.

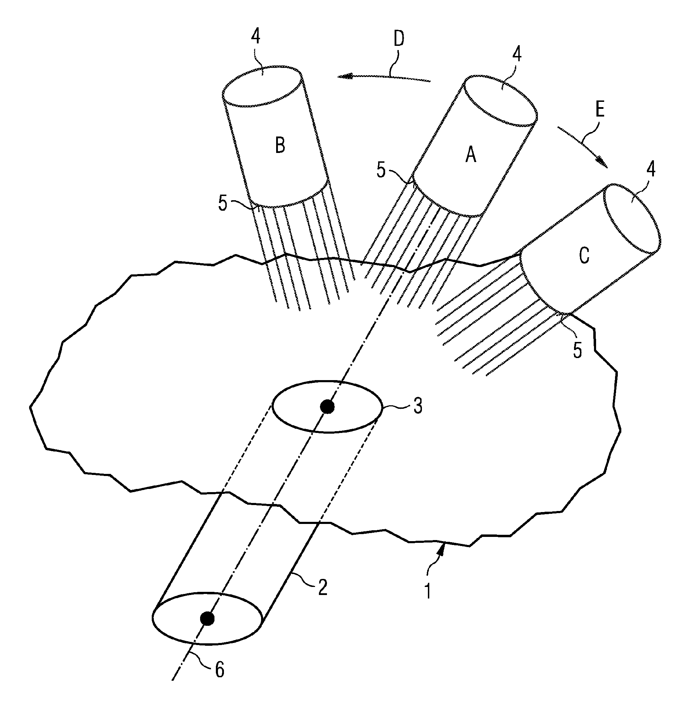

In der Zeichnung ist die Erfindung anhand eines schematisch dargestellten Ausführungsbeispiels näher erläutert. Sie zeigt einen Ausschnitt einer Turbinenschaufel 1, und zwar die Außenseite einer Wandung dieser Turbinenschaufel 1. Die Wandung wird durchsetzt von einer Kühlluftbohrung 2, die an der Außenseite der Turbinenschaufel 1 in einer Austrittsellipse 3 endet. Innenseitig hat die Kühlluftbohrung 2 Verbindung zu einem hier nicht näher dargestellten Kühlluftkanal, der innerhalb der hohl ausgebildeten Turbinenschaufel 1 verläuft und Verbindung zu einer Druckluftquelle hat.

An einer hier nicht näher dargestellten Halterung ist ein Lasertriangulationssensor 4 angebracht, der eine Laserquelle zur Erzeugung eines Laserstrahls und einen Lichtdetektor aufweist. Die Laserquelle ist so ausgerichtet, dass der Laserstrahl an der unteren Stirnseite 5 des Lasertriangulationssensors senkrecht zu dieser Stirnseite austritt. Neben dem Austritt des Laserstrahls befindet sich der Lichtdetektor.

Bei Anwendung des erfindungsgemäßen Verfahrens wird der Lasertriangulationssensor 4 zunächst in der Stellung A ausgerichtet, d.h. so, dass er weitgehend koaxial in der vermuteten Längsmittelachse 6 der Kühlluftbohrung 2 liegt und in diese einstrahlt. Dies kann vor dem Erstauftrag einer Schutzschicht auf die Außenseite der Turbinenschaufel 1 geschehen oder bei deren Reparatur nach Entfernung der verbrauchten Schutzschicht. Danach wird der Lasertriangulationssensor 4 in der Zeichnungsebene entsprechend den Pfeilen D, E einmal nach links und einmal nach rechts verschwenkt. Die Positionen B und C stellen die jeweiligen, maximalen Winkelstellungen zur Längsmittelachse 6 dar. Dabei strahlt der von der Laserquelle erzeugte Laserstrahl nach wie vor in die Kühlluftbohrung 2 ein, wird jedoch in Abhängigkeit von der Winkelstellung unterschiedlich remittiert. Dies wird von dem Lichtdetektor erfasst, und die von ihm erzeugten Signale werden in ein Datenprofil mit Hilfe eines mehrdimensionalen Bildbearbeitungsprogramms umgesetzt. Der Schwenkvorgang bis zu den Positionen B und C kann mehrfach wiederholt werden, um möglichst viele Daten zu erhalten. In der Stellung, in der die Remission ein Minimum erreicht, wird eine weitgehend exakte Position der Lage der Kühlluftbohrung 2 bzw. deren Längsmittelachse 6 erhalten. Noch präziser gelingt dies, wenn der Lasertriangulationssensor 4 zusätzlich in einer von der Zeichnungsebene abweichenden Ebene, insbesondere einer um 90° verdrehten Ebene, verschwenkt wird und die dabei gewonnen Signale bzw. Daten dem Bildverarbeitungsprogramm zugeführt werden.

Mit Hilfe des so gewonnenen Datenprofils können die Längsmittelachsen 6 der Kühlluftbohrung 2 nach Aufbringen einer (neuen) Schutzschicht auf die Außenseite der Turbinenschaufel 1 exakt aufgefunden werden, selbst wenn die Kühlluftbohrungen 2 durch Material der Schutzschicht teilweise oder vollständig verschlossen sind. Die Daten können dazu benutzt werden, ein Abtraggerät, insbesondere ein Laserabtraggerät so zu steuern, dass die Teile der Schutzschicht, die die Austrittsellipsen 3 der Kühlluftbohrungen 2 einengen oder sogar verschließen, entfernt werden.

## Patentansprüche

1. Verfahren zur Behandlung von Turbinenschaufeln (1), die Kühlluftbohrungen (2) für den Austritt von Kühlluft aufweisen, wobei eine Schutzschicht aufgebracht wird und dann die durch die Schutzschicht teilweise oder ganz geschlossenen Kühlluftbohrungen wieder geöffnet werden,
**dadurch gekennzeichnet, dass**
Koordinaten über die Lage der Kühlluftbohrungen vor dem Aufbringen der Schutzschicht mit Hilfe eines auf dem optischen Triangulationsverfahren basierenden, optischen Messsensors (4) mit wenigstens einer eine Lichtstrahl erzeugenden Lichtquelle und wenigstens einem Lichtdetektor erfasst werden und die dabei gewonnenen Daten nach dem Aufbringen der Schutzschicht zur Steuerung eines Abtraggerätes zum Abtragen von die Kühlluftbohrungen (2) teilweise oder ganz bedeckenden Schutzschicht verwendet werden.

2. Verfahren nach Anspruch 1,
**dadurch gekennzeichnet, dass**
im Rahmen eines Reparaturverfahrens die durch den Betrieb der Turbinenschaufel verbrauchte Schutzschicht zunächst entfernt und danach die Erfassung der Koordinaten erfolgt.

3. Verfahren nach Anspruch 1 oder 2,
**dadurch gekennzeichnet, dass**
als Messsensor ein Lasertriangulationssensor (4) verwendet wird.

4. Verfahren nach einem der Ansprüche 1 bis 3,
**dadurch gekennzeichnet, dass**
jede Kühlluftbohrung (2) dadurch vermessen wird, dass der Lichtstrahl in die Kühlluftbohrung (2) in unterschiedlichen Stellungen zu dessen Längsmittelachse (6) eingestrahlt wird.

5. Verfahren nach Anspruch 4,
**dadurch gekennzeichnet, dass**
der Lichtstrahl in einer Ebene in mindestens drei unterschiedlichen Winkeln zur Längsmittelachse der jeweiligen Kühlluftbohrung (2) in diese eingestrahlt wird.

6. Verfahren nach Anspruch 4 oder 5,
**dadurch gekennzeichnet, dass**
der Lichtstrahl in mindestens zwei unterschiedlichen Ebenen in jeweils unterschiedlichen Winkeln zur Längsmittelachse der Kühlluftbohrung (2) in diese eingestrahlt wird.

7. Verfahren nach einem der Ansprüche 1 bis 6,
**dadurch gekennzeichnet, dass**
zur Ermittlung der Koordinaten der Lage der Kühlluftbohrungen (2) ein mehrdimensionales Bildbearbeitungsprogramm verwendet wird.

8. Verfahren nach einem der Ansprüche 1 bis 7,
**dadurch gekennzeichnet, dass**
zum Abtragen der Schutzschicht im Bereich der Kühlluftbohrungen (2) der Laserstrahl eines Laserabtraggerätes verwendet wird.

9. Vorrichtung zur Ermittlung der Lage von Kühlluftbohrungen (2) in Turbinenschaufeln,
**dadurch gekennzeichnet, dass**
die Vorrichtung einen für ein optisches Triangulationsverfahren geeigneten, optischen Messsensor (4) mit wenigstens einer einen Lichtstrahl erzeugenden Lichtquelle und mit wenigstens einem Lichtdetektor aufweist, wobei der Messsensor (4) an einer Halterung stellungsveränderbar angebracht ist und eine Auswerteeinheit aufweist, die derart ausgebildet ist, dass sie auf der Grundlage der von dem Lichtdetektor beim Einstrahlen des Lichtstrahls in eine Kühlluftbohrung (2) in unterschiedlichen Stellungen erzeugten Signale Koordinaten der Lage der Kühlluftbohrungen (2) gewinnt.

10. Vorrichtung nach Anspruch 9,
**dadurch gekennzeichnet, dass**
der Messsensor als Lasertriangulationssensor (4) ausgebildet ist.

11. Vorrichtung nach Anspruch 9 oder 10,
**dadurch gekennzeichnet, dass**
die Halterung eine Werkzeugmaschine, eine Koordinatenmessmaschine und/oder ein Messarm ist.

12. Vorrichtung nach einem der Ansprüche 9 bis 11,
**dadurch gekennzeichnet, dass**
die Lichtquelle an der Halterung in mindestens einer Ebene in unterschiedlichen Winkellagen einstellbar ist.

13. Vorrichtung nach einem der Ansprüche 9 bis 12,
**dadurch gekennzeichnet, dass**
die Lichtquelle an der Halterung in mehreren Ebenen und jeweils in unterschiedlichen Winkellagen einstellbar ist.

14. Vorrichtung nach einem der Ansprüche 9 bis 13,
**dadurch gekennzeichnet, dass**
Lichtquelle und Lichtdetektor zu einem einheitlichen Messsensor (4) zusammengefasst sind, der an der Halterung stellungsveränderbar angebracht ist.

15. Vorrichtung nach einem der Ansprüche 9 bis 14,
**dadurch gekennzeichnet, dass**
die Auswerteeinrichtung mit einem mehrdimensionalen Bildverarbeitungsprogramm zur Auswertung der von dem Lichtdetektor erzeugten Signale versehen ist.

16. Vorrichtung nach einem der Ansprüche 9 bis 15,
**dadurch gekennzeichnet, dass**
zu der Vorrichtung ein Abtraggerät zum Abtragen der Schutzschicht im Bereich der Kühlluftbohrungen, insbesondere ein Laserabtraggerät, das einen Laserstrahl erzeugt, gehört, wobei das Abtraggerät mit der Auswerteeinrichtung in der Weise zusammenarbeitet, dass die Ausrichtung des Abtraggerätes in Abhängigkeit von den in der Auswerteeinrichtung aufbereiteten Daten der Kühlluftbohrungen (2) erfolgt.

17. Vorrichtung nach Anspruch 16,
**dadurch gekennzeichnet, dass**
die Ausrichtung derart erfolgt, dass der Laserstrahl des Laserabtraggerätes koaxial und/oder parallel zur Mittellängsachse der jeweiligen Kühlluftbohrung (2) in diese einstrahlt.
